# EUROPEAN PATENT APPLICATION

(11) **EP 2 182 493 A1**
(43) Date of publication of application: **05.05.2010**
(21) Application number: 08305769.5
(22) Date of filing: 04.11.2008
(51) Int. Cl.: G07F 7/08, G06Q 20/00

(54) **Remote user authentication using NFC**

(71) Applicant: Gemalto SA, 92190 Meudon (FR)
(72) Inventor: Mahalal, Ilan, 92190, Meudon (FR)

(57) **Abstract**

The invention relates to a system comprising a first authenticating entity, and a portable communication device equipped with an NFC antenna, and comprising means to authenticate the user of the portable communication device to the first authenticating entity. The system further comprises a second authenticating entity, and a portable authentication device equipped with an NFC antenna. The portable authentication device stores authentication credentials for authenticating the user to the second authenticating entity. The portable communication device comprises means to authenticate the user to the second authenticating entity by communicating with the portable authentication device through the NFC antennas.
The invention also relate to a portable communication device and to a method for authenticating a user to an authenticating entity.
The communication device comprises a GSM or UMTS network interface. The authentification device can be implemented as a card.

## Description

The invention relates to systems comprising portable authentication tokens, and involving transactions based on Near Field Communications (a.k.a NFC), which is a technology for exchanging data in a wireless manner over a very short distance, such as a few centimeters.

Portable authentication tokens are electronic devices, which can be easily carried by users, and allow users to authenticate themselves to third parties. The most widespread example of portable authentication token is probably the smart card. Billions of smart cards are used in the world, and allow card holders (people carrying the smart card) to authenticate themselves e.g. to a financial institution (e.g. when making payment with a bank card), to a telecom operator (e.g. when passing phone calls with a GSM phone equipped with a SIM card), or to a government organization (e.g. when authenticating with a healthcare smart card, ID smart card, or electronic passport). The authentication typically involves a cryptographic algorithm and a cryptographic key securely stored in the portable authentication token. It can also be based on other types of credentials (e.g. mere username and password, or biometric data, just to name a few), used either alone, or in combination (e.g. PKI plus fingerprint). Other types of portable authentication tokens exist, for example USB keys, parallel port dongles, OTP tokens (OTP stands for One Time Password), etc. It is also possible to use a cellular phone or a PDA, or any portable device loaded with proper software and/or comprising appropriate hardware (e.g. cryptographic co-processor and crypto libraries) as a portable authentication token.

It has become more and more common in the recent years to switch from contact to contact-less communications, in many field of technology, and more specifically in the field of portable authentication devices. Contact-less technologies are typically more convenient (easier and faster to use by end users). In particular, it has been proposed to embed an antenna in cell phones, and to connect the SIM card to the antenna. The SIM card can therefore establish NFC communications with an NFC reader, for example in transport applications, the user can simply bring his cell phone close to the gate at the entry of a metro station, and open it this way instead of having to insert a ticket. The SIM card is considered a trusted environment (more trusted than a cell phone, which could be more easily hacked, e.g. by loading rogue application into it). The SIM card is therefore a good place to store authentication credentials. The best solutions do not require the cell phone to be powered (i.e. when the battery of the cell phone is empty, the user can still enter the metro), by powering the SIM card directly through the NFC antenna of the cell phone, the power source being in the contact-less reader of the metro gate, with which the SIM card communicates through the cell phone NFC antenna

It is sometimes problematic to have the SIM card access the antenna of the cell phone. There is not always a standard way for the SIM card to access the antenna. Cell phone manufacturers nowadays typically try to add an antenna in their cell phone because they feel that it is a growing need, however they are sometimes a bit reluctant when it comes to opening access to the built-in antenna for the SIM card, because they would prefer to drive the antenna from within the phone instead of the SIM (in order to keep this value under their control rather than under the control of smart card manufacturers).

Another problem with SIM cards hosting third parties applications (such as transport or banking applications), is that the SIM card is typically under the control of a mobile network operator, and the mobile network operator should give his consent for a third party (e.g. a transportation operator, or a bank) to load data into the SIM card. The consent is not only a matter of approval, but also a technical issue since loading data in a SIM card is typically protected by cryptographic keys or other security mechanisms, which implies that either the mobile network operator has to accept to share certain keys with the other operator, or the other operator should accept to send whatever data he needs to load into the card to the mobile network operator, and to rely on the mobile network operator to load such data securely into the SIM. In addition, the other operator must trust that the SIM card is secure. A bank card is produced and personalized under the strict supervision of financial institutions which define the certification criteria which the factories should meet, and define the specifications for the bank cards, etc. But a financial institution willing to load applets into a SIM card has no easy way of controlling or even assessing the security of the SIM card. So this poses lots of technical, trust, and business issues (e.g. the mobile network operator does not necessarily want to share information about his customer base with the other operator, and vice versa).

However having the SIM card host third party applications such as banking or transport applications has advantages, e.g. because the same applications can be made available via the mobile network, either directly or through the Internet (an Internet connection can typically be established via the mobile network on many recent cell phones), and at the same time via the NFC interface (e.g. NFC POS in a shop, POS standing for Point Of Sales terminal). In other words, and as an example, with a banking application loaded in the SIM, the user could for example browse the Internet from his cell phone, select an e-commerce web site on which to buy an article, and pay the article securely with the banking application loaded in his SIM. But seconds later, the same user could also use the same banking application in order to buy some bread in a baker's shop, simply by bringing his cell phone close to the POS of the baker (this would trigger an NFC communication with the banking application in the SIM, through the NFC antenna of the mobile phone).

It is an object of the invention to propose a solution that is easier to put in place while keeping the advantages of existing solutions. In particular, it is desired to keep the possibility to access a third party application through the mobile network, and at the same time to be able to carry out regular NFC transactions, while minimizing the need for complex technical protocols (key sharing, key distribution, etc.) and the need for business agreement between the various operators.

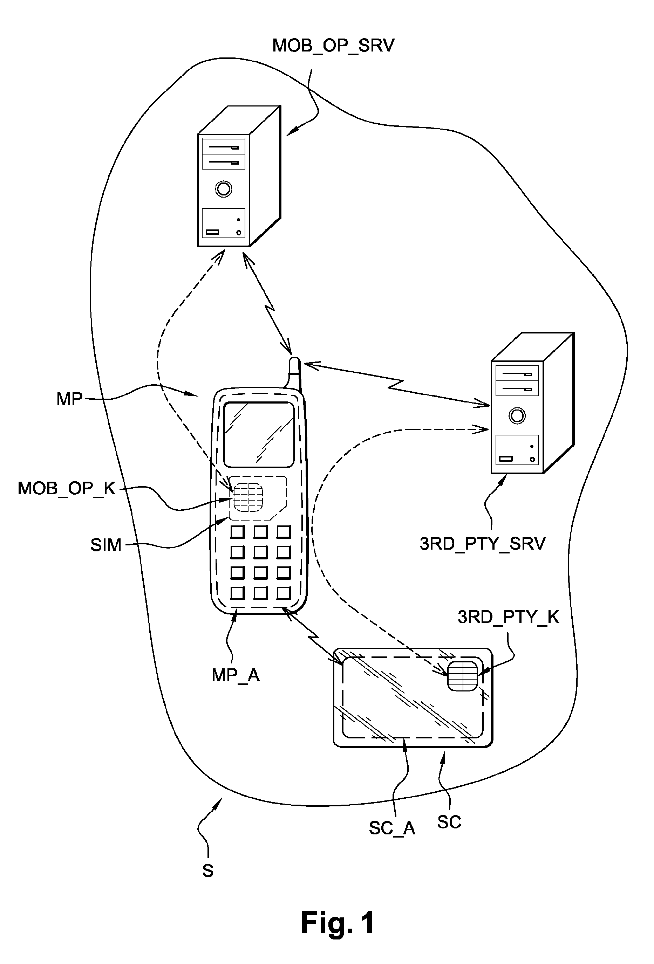

The invention and its advantages will be explained more in details in the following specification referring to the appended drawing, in which Figure 1 represents a system according to the invention.

A system S according to a preferred embodiment of the invention comprises
- a first authenticating entity MOB_OP_SRV, and
- a portable communication device (represented as a mobile phone MP on Figure 1) equipped with an NFC antenna MP_A (represented as a dotted ellipse on Figure 1 - it is dotted because it is not visible from outside), and comprising means SIM (represented as a SIM card drawn in dotted lines because it is inside the mobile phone) to authenticate the user of the portable communication device MP to the first authenticating entity MOB_OP_SRV. The means SIM can comprise first authentication credentials MOB_OP_K (e.g. cryptographic key K). The first authentication credentials MOB_OP_K can be stored in the portable communication device itself (e.g. in a flash memory), or in a first portable authentication device (e.g. a SIM card) included in the portable communication device MP. It is typically considered more secure to use a dedicated device (such as a SIM card) for storing such credentials rather than storing them in the portable communication device itself. The authentication is represented on Figure 1 by a dotted arrow between the first authentication credentials (which are stored in the chip of the SIM card, the chip being represented by its 8 ISO 7816 contacts - the arrow points to the chip), and the first authenticating entity MOB_OP_SRV.

The portable communication device MP is preferably a mobile phone, however it could also be a laptop computer, a PDA (personal digital assistant), an MP3 and/or movie player with communication capabilities, an MID, etc. An MID is a mobile Internet device such as the "M! PC Pocket" developed by Compal Electronics and Intel, which focuses on e-mail and web browsing, or the "Archos 3G+" developed by Archos, which focuses on TV and video. Both of them have been recently launched by mobile network operators such as SFR in France, they embed a SIM card, but they do not offer any voice services.

In order to communicate, the portable communication device MP is typically registered with a network operator, preferably a mobile network operator, which grants access to the mobile network upon successful authentication. The mobile network can be for example a GSM, WiFi, UMTS, Bluetooth, Infrared, AMPS, DECT, CDMA, 3G, or any other appropriate wireless network. The first authentication entity is typically a server of the mobile network operator, to which the portable communication device connects through the mobile network, and which authenticates the user of the portable communication device. For example, the portable communication device may share a key with the first authentication entity, which may send a challenge (e.g. random number), and if the portable communication device possesses the right key it is able to encrypt the challenge correctly, in a manner well known in the art. Other known techniques are available for the authentication (for example username and password could be used). It is preferable to store the credentials used for authentication in a secure sub system, such as a smart card SIM. The system S further comprises
- a second authenticating entity 3RD_PTY_SRV, such as a server of a third party (e.g. banking institution or transport company) and
- a portable authentication device (for example a smart card SC) equipped with an NFC antenna SC_A (represented as a dotted ellipse on figure 1 because its embedded inside the card body and not visible from outside).

The portable authentication device SC can also be any other secure medium such as a secure USB key, a secure MMC card, or a secure OTP token (just to name a few). The portable authentication device SC stores authentication credentials 3RD_PTY_K (typically a key K, for example a symmetric key such as DES or AES key, an asymmetric keys such as RSA or EC, but the authentication credentials could also be biometric data, passwords, etc.) for authenticating the user to the second authenticating entity 3RD_PTY_SRV. The authentication algorithm can also be any conventional authentication algorithm suitable in this context.

The portable communication device MP comprises means to authenticate the user to the second authenticating entity 3RD_PTY_SRV by communicating with the portable authentication device SC through the NFC antennas MP_A and SC_A. The authentication is represented on Figure 1 by a dotted arrow between the third party server 3RD_PTY_SRV and the smart card SC. For example, the authentication means can be a java applet embedded in the portable communication device MP, the applet forwarding a challenge received from the second authenticating entity 3RD_PTY_SRV to the antenna MP_A which transmits it via the antenna SC_A to the portable authentication device SC, which can then process the challenge (e.g. encrypt it with a cryptographic key shared with the second authenticating entity), and return the processed challenge via the antenna SC_A to the antenna MP_A which passes it back to the applet, which can send it via the mobile network to the second authenticating entity 3RD_PTY_SRV, for verification. Upon successful authentication, the user can access services provided by the third party controlling the second authentication entity.

It is advantageous that no specific authorization from the mobile network operator is needed. The mobile network operator merely provides regular network connectivity services (subject to conventional authentication with the means SIM), and the third party can independently authenticate the user, by simply installing a plug-in in the portable communication device MP (applet, etc.), or by relying on a pre-existing generic module in the portable communication device MP. Not only does the mobile network operator not need to authorize this transaction, but he's typically not even informed that the transaction took place (unless e.g. he spies the communications of his subscribers). The invention therefore provides a high level of independence between the mobile network operator and the third party, while enabling the same type of service as offered when the third party loads user specific authentication data in the mobile phone (or its component such as the SIM card) via the operator.

In preferred embodiments, the portable authentication token is very compact and doesn't have a battery or another type of power supply; the portable communication device MP comprises means to power the portable authentication device SC through the NFC antennas MP_A, SC_A.

In preferred embodiments, the portable communication device MP comprises means for digitally signing user data (e.g. purchase order on an e-commerce web site, contract, email, etc.). Said means comprise using an asymmetric private key (e.g. an RSA or elliptic curve private key) stored in the portable authentication device SC. The asymmetric private key preferably never leaves the portable authentication token SC but is used inside the portable authentication token on behalf of the portable communication device MP. The portable communication device preferably sends the user data to be signed or a hash of the user data to be signed to the portable authentication device, which signs it and returns the digital signature to the portable communication device. The interaction between the portable communication device and the portable authentication device during the signature operation takes place through the NFC antennas MP_A and SC_A. The signature comprises some form of authentication of the user, in the sense that the user cannot later deny that he was the one signing the data to be signed.

The invention also relates to the portable communication device as described above, i.e. a portable communication device equipped with an NFC antenna MP_A, comprising means SIM to authenticate the user of the portable communication device MP to a first authenticating entity MOB_OP_SRV, and further comprising means to authenticate the user to a second authenticating entity 3RD_PTY_SRV by communicating with a portable authentication device SC of the user through the NFC antenna MP_A, wherein the portable authentication device SC is equipped with an NFC antenna SC_A, and stores authentication credentials 3RD_PTY_K for authenticating the user to the second authenticating entity 3RD_PTY_SRV.

The variants and preferred embodiments described for the portable communication device when it is part of the above described system apply equally to the portable communication device taken alone and vice versa.

The invention also relates to a method for authenticating a user to an authenticating entity 3RD_PTY_SRV. The method comprises providing the user with a portable authentication device SC equipped with an NFC antenna SC_A. The portable authentication device SC stores authentication credentials 3RD_PTY_K for authenticating the user to the authenticating entity 3RD_PTY_SRV. The user has a portable communication device MP equipped with an NFC antenna MP_A. This does not mean that the user is necessarily the owner of the portable communication device, for example the user may be renting the portable communication device from a rental company. Or the user could be an employee of a company which provides a portable communication device to all of his employees. Or the user could also be a child, and the portable communication device could belong to his parents. However, in all such situations, the user "has" the portable communication device in the sense that he is the custodian (or one of the custodians) of the portable communication device. For example, if the portable communication device is a mobile phone equipped with a SIM card, it is the user who knows the PIN code and who is authenticated with the PIN code, it is the user who is responsible for the mobile phone (making sure it is not lost or stolen), and who typically carries it at all time. Of course, it is also possible to share a mobile phone between different users (joint control over the mobile phone), e.g. different family members, or different employees working in a given team, in which case either there is a PIN code for each family member (resp. each employee), or a common PIN code authenticating the family (resp. the team) as a whole.

The portable communication device MP is set to authenticate the user to the authenticating entity 3RD_PTY_SRV by communicating with the portable authentication device SC through the NFC antennas MP_A, SC_A.

Therefore the user can take advantage of his portable communication device (which he typically carries with him, as it is portable), to access services of a third party which has no link (or at least does not need to have links) with the network operator which provide network access to his portable communication device.

The fact that the portable communication device MP is the portable communication device of the user can be materialized by the fact that the portable communication device MP comprises first authentication credentials MOB_OP_K for authenticating the user to a first authenticating entity MOB_OP_SRV (typically a server of a network operator providing network connectivity, preferably in wireless mode, to the portable communication device). In other words, the portable communication device MP is linked to the user. The portable communication device is not, for example, a POS terminal handed to the user in a shop, since such POS is not linked to the customers of the shop, but to the owner of the shop, who typically buys or rents the POS from a bank.

The variants and preferred embodiments described above for the system and device apply equally to the method, and vice versa.

## Claims

1. System (S) comprising
• a first authenticating entity (MOB_OP_SRV), and
• a portable communication device (MP) equipped with an NFC antenna (MP_A), and comprising means (SIM) to authenticate the user of the portable communication device (MP) to the first authenticating entity (MOB_OP_SRV),
• a second authenticating entity (3RD_PTY_SRV), and
• a portable authentication device (SC) equipped with an NFC antenna (SC_A), wherein the portable authentication device (SC) stores authentication credentials (3RD_PTY_K) for authenticating the user to the second authenticating entity (3RD_PTY_SRV),
the system (S) being **characterized in that** the portable communication device (MP) comprises means to authenticate the user to the second authenticating entity (3RD_PTY_SRV) by communicating with the portable authentication device (SC) through the NFC antennas (MP_A, SC_A).

2. System (S) according to claim 1, wherein the means (SIM) for authenticating the user to the first authenticating entity (MOB_OP_SRV) comprise first authentication credentials (MOB_OP_K).

3. System (S) according to claim 2, wherein the first authentication credentials (MOB_OP _K) are stored in a first portable authentication device (SIM) included in the portable communication device (MP).

4. System (S) according to any previous claim, wherein the first authenticating entity (MOB_OP_SRV) is a server of a mobile network operator managing a mobile network to which the portable communication device (MP) is connectable.

5. System (S) according to any previous claim, wherein the second authenticating entity (3RD_PTY_SRV) is a server of a third party distinct from the mobile network operators managing the networks to which the portable communication device (MP) is connectable.

6. System according to any previous claim, wherein the portable communication device (MP) comprises means to power the portable authentication device (SC) through the NFC antennas (MP_A, SC_A).

7. System according to any previous claim, wherein the portable communication device (MP) comprises means for digitally signing user data, and wherein said means comprise using an asymmetric private key stored in the portable authentication device (SC).

8. Portable communication device (MP) equipped with an NFC antenna (MP_A), and comprising means (SIM) to authenticate the user of the portable communication device (MP) to a first authenticating entity (MOB_OP_SRV), **characterized in that** it comprises means to authenticate the user to a second authenticating entity (3RD_PTY_SRV) by communicating with a portable authentication device (SC) of the user through the NFC antenna (MP_A), wherein the portable authentication device (SC) is equipped with an NFC antenna (SC_A), and stores authentication credentials (3RO_PTY _K) for authenticating the user to the second authenticating entity (3RO_PTY _SRV).

9. Method for authenticating a user to an authenticating entity (3RO_PTY _SRV), wherein the method comprises providing the user with a portable authentication device (SC) equipped with an NFC antenna (SC_A), wherein the portable authentication device (SC) stores authentication credentials (3RO_PTY _K) for authenticating the user to the authenticating entity (3RO_PTY _SRV), the method being **characterized in that**, the user having a portable communication device (MP) equipped with an NFC antenna (MP_A), the portable communication device (MP) is set to authenticate the user to the authenticating entity (3RO_PTY _SRV) by communicating with the portable authentication device (SC) through the NFC antennas (MP_A, SC_A).

10. Method according to claim 9, wherein the fact that the portable communication device (MP) is the portable communication device of the user is materialized by the fact that the portable communication device (MP) comprises first authentication credentials (MOB_OP_K) for authenticating the user to a first authenticating entity (MOB_OP_SRV).

11. Method according to claim 10, wherein the first authentication credentials (MOB_OP_K) are stored in a first portable authentication device (SIM) included in the portable communication device (MP).

12. Method according to claim 10 or 11, wherein the first authenticating entity (MOB_OP_SRV) is a server of a mobile network operator managing a mobile network to which the portable communication device (MP) is connected.

13. Method according to any of claims 9 to 12, wherein the authenticating entity (3RD_PTY_SRV) is a server of a third party distinct from the mobile network operator managing the network to which the portable communication device (MP) is connected.

14. Method according to any of claims 9 to 13, wherein the portable communication device (MP) is set to power the portable authentication device (SC) through the NFC antennas (MP_A, SC_A).

15. Method according to any of claims 9 to 14, wherein the portable communication device (MP) is set to digitally sign user data by using an asymmetric private key stored in the portable authentication device (SC).
